# EUROPÄISCHE PATENTSCHRIFT

(11) **EP 2 243 208 B1**
(45) Veröffentlichungstag und Bekanntmachung des Hinweises auf die Patenterteilung: **04.04.2012**
(21) Anmeldenummer: 09710396.4
(22) Anmeldetag: 11.02.2009
(51) Int. Cl.: H02J 3/38, H02J 13/00

(54) **PV-TEILGENERATOR-ANSCHLUSSKASTEN, PV-GENERATOR-ANSCHLUSSKASTEN UND PV-WECHSELRICHTER FÜR EINE PV-ANLAGE SOWIE PV-ANLAGE**
PV SUB-GENERATOR JUNCTION BOX, PV GENERATOR JUNCTION BOX, AND PV INVERTER FOR A PV SYSTEM, AND PV SYSTEM
BOÎTE DE RACCORDEMENT D'UN SOUS-GÉNÉRATEUR PV, BOÎTE DE RACCORDEMENT D'UN GÉNÉRATEUR PV ET ONDULEUR PV POUR UNE INSTALLATION PV AINSI QU'INSTALLATION PV

(30) Priorität: 11.02.2008 DE 102008008503
(43) Veröffentlichungstag der Anmeldung: 27.10.2010
(73) Patentinhaber: Siemens Aktiengesellschaft, 80333 München (DE)
(72) Erfinder: GIESLER, Bodo, 80997 München (DE)
(86) Internationale Anmeldenummer: PCT/EP2009/051546
(87) Internationale Veröffentlichungsnummer: WO 2009/101096

(56) Entgegenhaltungen:
- WO-A-02/093655
- WO-A-03/071655
- DE-A1- 19 859 732
- US-A1- 2004 167 676

## Beschreibung

Die Erfindung betrifft einen PV-Teilgenerator-Anschlusskasten für eine PV-Anlage, welcher eine Vielzahl von elektrischen Anschlüssen zum möglichen Anschließen jeweils einer PV-Strangleitung eines oder mehrerer in Reihe geschalteter PV-Module aufweist. Er weist einen Teilgeneratorleitungsanschluss zum Anschließen einer PV-Teilgeneratorleitung eines entfernt gelegenen zentralen PV-Wechselrichters oder zum Anschließen einer PV-Teilgeneratorleitung eines dazwischengeschalteten PV-Generator-Anschlusskastens auf. Der PV-Teilgenerator-Anschlusskasten weist eine elektronische Steuereinheit auf, welche datentechnisch mit einer Zentralsteuereinheit des PV-Wechselrichters zum Austausch von Daten verbunden ist.

Die Erfindung betrifft weiterhin einen PV-Generator-Anschlusskasten für eine PV-Anlage, welcher eine Mehrzahl von Teilgeneratorleitungsanschlüssen zum möglichen Anschließen jeweils einer PV-Teilgeneratorleitung eines PV-Teilgenerator-Anschlusskastens aufweist. Er weist einen Hauptleitungsanschluss zum Anschließen einer PV-Gleichstromhauptleitung eines entfernt gelegenen zentralen PV-Wechselrichters auf. Der PV-Generator-Anschlusskasten weist zumindest einen Haupttrennschalter zum Trennen der PV-Gleichstromhauptleitung und/oder zumindest einen Sammeltrennschalter zum Trennen der jeweiligen PV-Teilgeneratorleitung auf.

Weiterhin betrifft die Erfindung einen PV-Wechselrichter für eine PV-Anlage, welcher zumindest einen Teilgeneratorleitungsanschluss zum möglichen Anschließen je einer PV-Teilgeneratorleitung einer Vielzahl von PV-Teilgenerator-Anschlusskästen und/oder zum Anschließen je einer PV-Gleichstromhauptleitung eines dazwischengeschalteten PV-Generator-Anschlusskastens aufweist. Er weist einen Netzanschluss zum Anschließen des PV-Wechselrichters an ein Stromversorgungsnetz auf. Der PV-Wechselrichter weist zudem eine Zentralsteuereinheit zur Steuerung des PV-Wechselrichters sowie zur Übertragung von Daten an die Vielzahl von datentechnisch mit der Zentralsteuereinheit verbundenen PV-Teilgenerator-Anschlusskästen auf.

Schließlich betrifft die Erfindung eine PV-Anlage mit zumindest einem derartigen zentralen PV-Wechselrichter und mit einer Vielzahl von derartigen PV-Teilgenerator-Anschlusskästen.

Aus der Veröffentlichung der US 2006/0237058 A1 ist ein derartiger PV-Teilgenerator-Anschlusskasten offenbart.

Aus der deutschen Übersetzung DE 60 2004 011 201 T2 des europäischen Patents EP 1 609 250 B1 ist ein Verfahren zur Kommunikation über einen Kommunikationskanal zwischen einer Sammeleinheit und einer Vielzahl von Steuervorrichtungen bekannt, von denen jede mindestens einem elektrischen Gerät zugeordnet ist. Die Sammeleinheit umfasst unter anderem ein Powerline-Modem sowie eine Übertragungsvorrichtung zur Übertragung von Daten beispielsweise mit einer zentralen Steuerung. Die elektrischen Geräte sind z.B. Inverter, Solarpaneele oder Sensoren. Jede Steuervorrichtung weist einen Mikroprozessor, einen Speicher und ein Powerline-Modem zum Übertragen und Empfangen von Daten über Trägerfrequenzübertragung auf der Stromversorgungsleitung auf. Jede der Steuervorrichtungen ist mit der entsprechenden elektrischen Vorrichtung bzw. dem elektrischen Gerät durch eine Schnittstelle verbunden und kann von dieser Information empfangen oder dieser Information senden. Als Information wird jede organisierte Reihe von Daten angesehen, die Instruktionen oder auszuführende Befehle repräsentieren kann und/oder aktuelle informative Daten, beispielsweise Daten bezüglich der Betriebsbedingungen der elektrischen Vorrichtung. Gemäß einem dortigen Ausführungsbeispiel nach Fig. 9 ist je eine derartige Steuervorrichtung 7₁, 7₂ einem Sensor 102 zugeordnet, der jeweils wieder einem Photovoltaikpaneel 101, 102 auf dem Dach eines Hauses zugeordnet ist. Die Sensoren 102 sind in eine DC-Stromleitung 104 zwischen dem jeweiligen Photovoltaikpaneel 101, 102 und einem nachgeschalteten Inverter 106 geschaltet. Die erfassten Informationen werden weiter über die DC-Stromleitung 104 jeweils an eine weitere Steuervorrichtung 7₃, 7₄ in eine normale AC-Stromleitung 3 eines externen Stromversorgungsnetzes und dort weiter an eine Datensammeleinheit 5 übertragen. An diese ist eine Betrachtungseinheit 6 für die Informationen angeschlossen. An das Stromversorgungsnetz sind andere gattungsgemäße Geräte 1₁, 1₂, wie Beleuchtungsgeräte, angeschlossen, die über jeweils eine weitere vorgeschaltete $teuervorrichtung 7₅, 7₆ angesteuert werden können.

Aus der internationalen Patentanmeldung WO 02/093655 A1 ist eine Photovoltaikanlage mit einer Vielzahl von Solarmodulen und einem zentralen Wechselrichter zur Einspeisung in ein öffentliches Stromversorgungsnetz bekannt. Die Solarmodule weisen je einen integrierten Hochfrequenz-Energiesender auf, der mit je einem Hochfrequenz-Energieempfänger auf elektromagnetische Weise, insbesondere auf transformatorischem Wege, gekoppelt werden kann. Der Energiesender und der Energieempfänger sind vorzugsweise eine primärseitige und eine sekundärseitige, über einen Luftspalt koppelbare Topfspulen. Der Wechselrichter weist ein oder mehrere Leistungskabel auf, an welchem die Energieempfänger entlang des Leistungskabels verteilt angeordnet angeschlossen sind. Die Energieempfänger speisen parallel in das Leistungskabel mit einer Gleichspannung ein, wenn an diese jeweils ein Solarmodul mit Energiesender gekoppelt ist. Zur Spannungsregelung der am Leistungskabel anliegenden Gleichspannung weist der Wechselrichter Messmittel und Steuermittel auf, wobei die Spannungsregelung durch entsprechende Aussteuerung einer H-Brücke des Wechselrichters erfolgt. Der Wechselrichter weist ferner eine Schaltung für eine Datenkommunikation zum Empfang von Daten über das Leistungskabel auf. Zudem weist die in der WO 02/093655 A1 offenbarte Photovoltaikanlage einen Datenbus zum Datentransport auf. Die Datenübertragung kann auf hochfrequenter elektromagnetischer Kopplung basieren. Der Datentransport erfolgt zwischen den Energiesendern und den Energieempfängern.

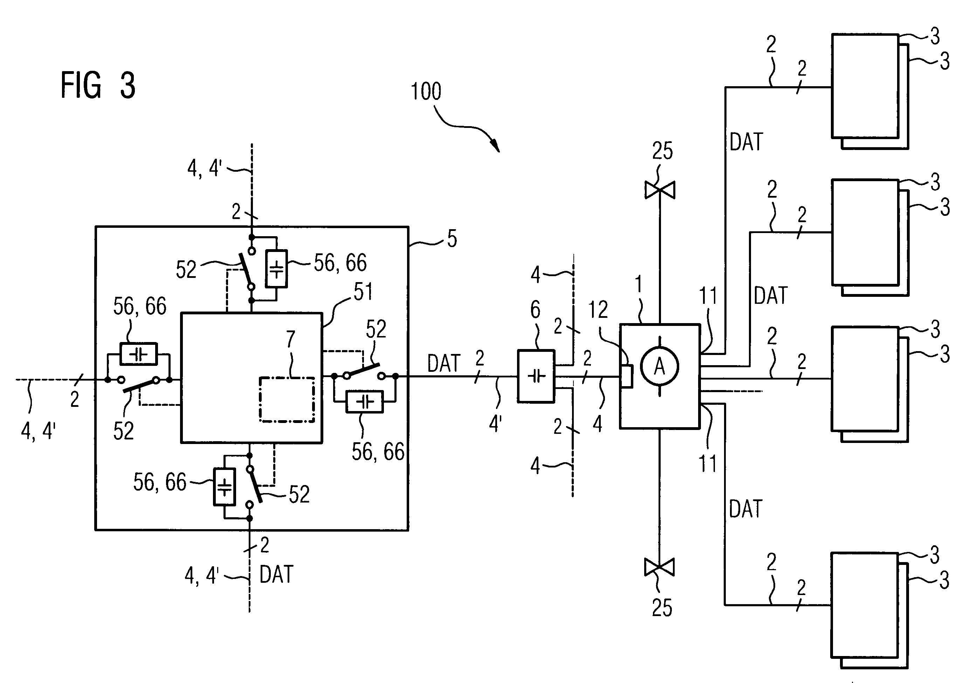

Aus der US 2004/0167676 A1 sind ein Verfahren und eine vorrichtung zum Steuern und verwalten von Stromerzeugern bekannt. Die Vorrichtung sendet über das Internet eine Anfrage an die jeweiligen Stromerzeuger, wie viel elektrische Leistung diese gerade erzeugen und in das Stromversorgungsnetz einspeisen. Die jeweiligen Stromerzeuger senden eine entsprechende Leistungsangabe über das Internet zurück. In der dortigen Fig. 3 ist ein Stromerzeuger offenbart, der ein erstes Powerline-Modem aufweist. Der Stromerzeuger wird dabei über ein herkömmliches Stromnetzkabel zur elektrischen Einspeisung in ein öffentliches Stromnetz in eine Steckdose eingesteckt. Die Steckdose und ein zweites, mit dem Internet verbundenes Powerline-Modem sind in einem Haus oder dergleichen installiert. Es leitet über das Internet empfangene Anfragen weiter an das erste Powerline-Modem und sendet eine erhaltene Leistungsangabe wieder zurück an die aufragende Vorrichtung.

Aus der deutschen Offenlegungsschrift DE 198 59 732 A1 ist ein Verfahren zur Datenübertragung zwischen einer Photovoltaikanlage mit mindestens einem Solarmodul und mit einer Zentrale beschrieben. Die Zentrale kann sich z. B. im Zählerkasten befinden. Die Daten werden über eine Netzleitung zwischen dem mindestens einen Solarmodul und der Zentrale im Wechsel mit der von dem mindestens einen Solarmodul erzeugten Energie übertragen. Bei der offenbarten Photovoltaikanlage sind die Wechselrichter bereits im Solarmodul integriert, sodass das jeweilige Solarmodul direkt an das öffentliche Stromversorgungsnetz angeschlossen werden kann. Die Datenübertragung erfolgt zwischen den jeweiligen Wechselrichtern und der Zentrale nur dann, wenn zuvor die Netzeinspeisung durch Umlegen eines Schalters unterbrechen worden ist. Durch Adressierung der Solarmodule können die jeweiligen Betriebdaten der Solarmodule über einen Rechner abgefragt werden.

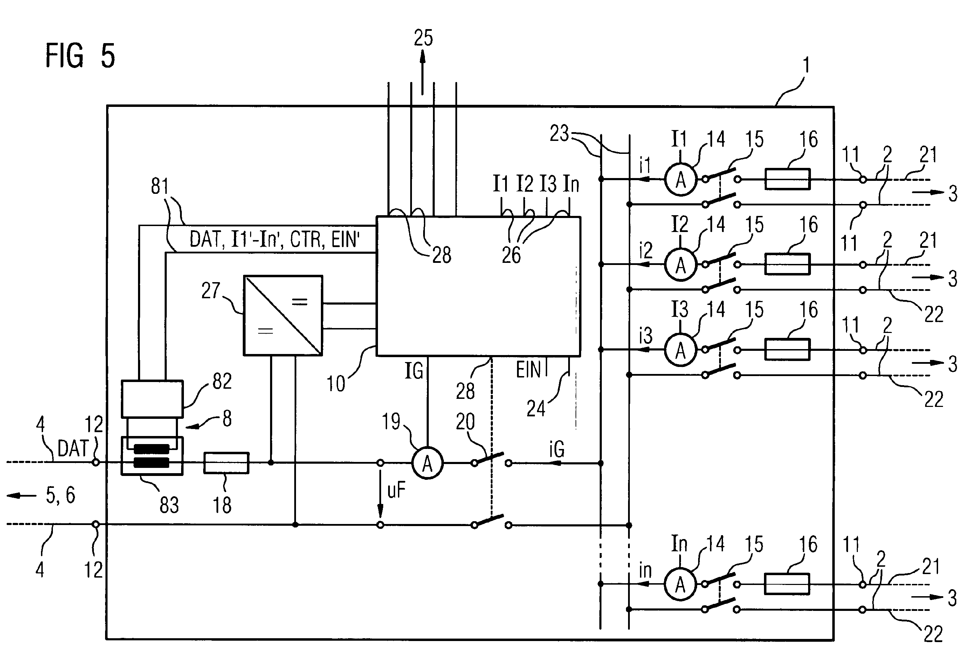

Aus der internationalen Patentanmeldung WO 03/071655 A1 ist offenbart, dass lokale Energieerzeugungsanlagen, wie z. B. PV-Anlagen, vermehrt parallel über ein Ortsnetz und einen Niederspannungs-Ortsnetztransformator in ein Hochspannungs-Energieversorgungsnetz einspeisen. Dabei weist jede Energieerzeugungsanlage auf ihrer Lastseite jeweils einen Lasttrennschalter auf, mittels welchem die jeweilige Energieversorgungsanlage von dem Ortsnetz abgetrennt werden kann. Zur Überwachung der lokalen Energieerzeugungsanlagen auf Überlastzustände oder Netzstörungen wird vorgeschlagen, dass auf der dreiphasigen Niederspannungsseite des Ortsnetztransformators die Amplituden und die Frequenz der verketteten Niederspannungen gemessen werden. Die ermittelten Messwerte werden in Form von digital kodierten Datensignalen über das Ortsnetz an alle Energieerzeugungsanlagen übertragen. Auf der Lastseite jeder Energieerzeugungsanlage werden gleichfalls die Amplitude und die Frequenz der dreiphasigen Ausgangsspannung gemessen und mit den über das Ortsnetz in Form von Datensignalen übertragenen Messwerten verglichen. In der dortigen Abb. 5 ist ein Messempfänger zum Empfangen von Messdaten mittels eines Powerline-Modems über das dreiphasige Ortsnetz eines öffentlichen Stromnetzes offenbart. Der Messempfänger wird netzseitig an einen Wechselrichter der jeweiligen Energieerzeugungsanlage angeschlossen.

Bekannte PV-Anlagen oder auch Solarfelder weisen zumeist einen zentralen PV-Wechselrichter und eine Vielzahl von in Reihe geschalteten PV-Modulen auf. Typischerweise werden ca. 10 bis 20 PV-Module in Reihe zu einem PV-Strang geschaltet, um eine für den PV-Wechselrichter zweckmäßige Feldspannung von ca. 1000 V zu erreichen. Der PV-Wechselrichter setzt die Eingangsgleichspannung in eine einphasige, vorzugsweise in eine dreiphasige, Netzspannung zur Einspeisung in ein Stromversorgungsnetz um.

Zur Minimierung der Leitungsverluste ist der PV-Wechselrichter typischerweise im Zentrum der PV-Anlage angeordnet. Die PV-Module sind vorzugsweise sternförmig um den PV-Wechselrichter herum angeordnet. Es können auch mehrere PV-Wechselrichter vorhanden sein. Bei PV-Anlagen mit einer maximalen Einspeiseleistung von mehr als 100 kW, insbesondere von mehr als 1 MW, ist eine Vielzahl von PV-Teilgenerator-Anschlusskästen vorhanden, welche einerseits jeweils über eine PV-Teilgeneratorleitung an dem zentralen PV-Wechselrichter angeschlossen ist und welche andererseits an eine Vielzahl von in Reihe zu einem PV-Strang geschalteten PV-Modulen angeschlossen ist. An einem solchen PV-Teilgenerator-Anschlusskasten werden typischerweise wenige Stränge von PV-Modulen angeschlossen, wie z. B. acht.

Bei besonders großen PV-Anlagen mit einer elektrischen Einspeiseleistung von mehreren Megawatt können zwischen den vielen PV-Teilgenerator-Anschlusskästen und dem zentralen PV-Wechselrichter noch PV-Generator-Anschlusskästen geschaltet sein. Von einem solchen PV-Generator-Anschlusskasten können mehrere PV-Teilgenerator-Anschlusskästen abgehen. Die Anzahl der angeschlossenen PV-Teilgenerator-Anschlusskästen liegt typischerweise in einem Bereich von 16 bis 100.

Ein PV-Teilgenerator-Anschlusskasten weist zum Anschließen der vielen PV-Strangleitungen eine Vielzahl von elektrischen Anschlüssen auf. An diesen können die Enden der jeweiligen PV-Strangleitungen aufgelegt und befestigt werden. Weiterhin weist der PV-Teilgenerator-Anschlusskasten typischerweise einen Teilgeneratorleitungsanschluss zum Anschließen einer PV-Teilgeneratorleitung auf. Letztere weist einen Kabeldurchmesser auf, der ein Vielfaches dicker ist als der Kabeldurchmesser einer PV-Strangleitung.

Aus dem Stand der Technik sind weiterhin PV-Teilgenerator-Anschlusskästen bekannt, die eine elektronische Steuereinheit, insbesondere eine Stromerfassungs- und Überwachungseinheit, aufweisen. Derartige Steuereinheiten weisen typischerweise einen Prozessor oder Mikrocontroller auf, um vor Ort erfasste Daten, wie z. B. Strangstrommesswerte, Feldspannungsmesswerte, Temperaturmesswerte oder Schalt-oder Hilfskontaktsignale, an eine Zentralsteuereinheit des PV-Wechselrichters zur übergeordneten Steuerung und Regelung zu übermitteln. Auf umgekehrtem Wege kann die jeweilige Steuereinheit eines PV-Teilgenerator-Anschlusskastens Steuerdaten von der Zentralsteuereinheit des PV-Wechselrichters empfangen, um z. B. Stellglieder zur Sonnennachführung der PV-Module oder Schaltmittel, wie z. B. Schütze, ansteuern zu können.

Die Vielzahl von PV-Teilgenerator-Anschlusskästen bringt es mit sich, dass auch eine Vielzahl von Signal- oder Datenleitungen, insbesondere eine Vielzahl von Busleitungen, von dem zentralen PV-Wechselrichter zu dem jeweiligen PV-Teilgenerator-Anschlusskasten geführt werden muss. Häufig ist es so, dass die üblicherweise gemeinsam mit den PV-Teilgeneratorleitungen in einem Kabelkanal verlegten Signal-oder Datenleitungen deutlich mehr Platz beanspruchen als die PV-Teilgeneratorleitungen an sich. Entsprechend kostenintensiv, langwierig und aufwändig ist die Kabelverlegung für eine solche PV-Anlage.

Zur Lösung des Problems ist es zwar bekannt, eine Funkdatenverbindung zwischen dem zentralen PV-Wechselrichter und dem jeweiligen PV-Teilgenerator-Anschlusskasten vorzusehen. Aufgrund der abschirmenden Wirkung der PV-Module sind solche Datenverbindungen äußerst unsicher.

Es ist somit eine Aufgabe der Erfindung, einen PV-Teilgenerator-Anschlusskasten, einen PV-Generator-Anschlusskasten sowie einen PV-Wechselrichter anzugeben, welche einen erheblich geringeren Aufwand für die Kabelverlegung bei einer zugleich sicheren Datenübertragung ermöglichen.

Es ist eine weitere Aufgabe der Erfindung, eine entsprechende PV-Anlage anzugeben.

Die Aufgabe der Erfindung wird für den PV-Teilgenerator-Anschlusskasten mit den Merkmalen des Patentanspruchs 1 gelöst. Vorteilhafte Ausführungsformen sind in den abhängigen Ansprüchen 2 bis 5 angegeben. Die Aufgabe wird für den PV-Generator-Anschlusskasten mit den Merkmalen des Patentanspruchs 6 gelöst. Für den PV-Wechselrichter wird die Aufgabe mit den Merkmalen des Anspruchs 7 gelöst. Vorteilhafte Ausführungsformen des PV-Wechselrichters sind in den Ansprüchen 8 und 9 genannt. Im Anspruch 10 ist eine PV-Anlage mit einem derartigen PV-Wechselrichter und mit einer Vielzahl von derartigen PV-Teilgenerator-Anschlusskästen angegeben. Im Anspruch 11 ist eine vorteilhafte Ausführungsform der PV-Anlage genannt.

Erfindungsgemäß weist der PV-Teilgenerator-Anschlusskasten ein Powerline-Modem zum Ein- und Auskoppeln der Daten über die PV-Teilgeneratorleitung auf.

Kern der Erfindung ist die Übertragung der Daten von dem zentralen PV-Wechselrichter zu den jeweiligen PV-Teilgenerator-Anschlusskästen über die bereits vorhandenen PV-Teilgeneratorleitungen, die die PV-Teilgenerator-Anschlusskästen leistungsmäßig mit dem zentralen PV-Wechselrichter verbinden.

Der besondere Vorteil ist, dass auf eine separate Datenleitung bzw. Busleitung von dem jeweiligen PV-Teilgenerator-Anschlusskasten zu dem zentralen Wechselrichter verzichtet werden kann.

Bei dem Powerline-Modem handelt es sich um eine Trägerfrequenzanlage (TFA), mittels der Daten in beiden Richtungen auf einer Stromleitung aufmoduliert werden. Die Ein- und Auskopplung der Daten kann auf kapazitivem Wege, wie z. B. mittels eines Kondensators, erfolgen. Sie kann alternativ auf induktivem Wege, wie z. B. mittels eines Übertragers, oder auf resistivem Wege, wie z. B. mittels eines in seinem Ohm-Wert veränderlichen Widerstands, erfolgen. Die zur Übertragung verwendete Frequenz liegt typischerweise in einem Bereich von 1 MHz bis 30 MHz. Die Übertragungsfrequenz kann in besonderen Fällen, wie z. B. bei flächenmäßig kleinen PV-Anlagen, auch darüber liegen, wie z. B. bei 433 MHz. Die zur Verfügung stehende Datenrate kann bis zu mehreren Megabit/s betragen.

Vorzugsweise ist jeder PV-Teilgenerator-Anschlusskasten über eine individuelle Busadresse durch die Zentralsteuereinheit des PV-Wechselrichters adressierbar. Vorzugsweise nimmt die Zentralsteuereinheit eine Masterfunktion zur Koordinierung der übergeordneten bidirektionalen Datenübertragung wahr.

Nach einer Ausführungsform sind das Powerline-Modem und die Steuereinheit über eine Busverbindung miteinander verbunden. Die Datenverbindung zwischen Powerline-Modem und Steuereinheit kann z. B. eine serielle oder eine parallele Schnittstelle sein. Im einfachsten Fall erfolgt die Datenkommunikation über ein so genanntes SPI-Interface (für Serial Port Interface) der Steuereinheit des PV-Teilgenerator-Anschlusskastens. Die Steuereinheit ist insbesondere ein Mikrocontroller oder ein Mikroprozessor.

Nach einer vorteilhaften Ausführungsform weist der PV-Teilgenerator-Anschlusskasten zumindest eine Strommesseinheit zur Messung eines jeweiligen Strangstromes und/oder eines Sammelstrangstromes auf. Die an die Zentralsteuereinheit des PV-Wechselrichters mittels des Powerline-Modems übertragbaren Daten enthalten korrespondierende Strommessdaten.

Damit ist der Vorteil verbunden, dass sämtliche Strangströme der Vielzahl von in Reihe geschalteten PV-Modulen von der Zentralsteuereinheit des PV-Wechselrichters erfasst werden können. Dadurch ist eine verbesserte übergeordnete Steuerung und Überwachung der PV-Anlage möglich. Der erfindungsgemäße PV-Teilgenerator-Anschlusskasten kann alternativ oder zusätzlich auch nur eine Strommesseinheit zur Messung des Sammelstrangstromes aufweisen. Vorzugsweise weist der PV-Teilgenerator-Anschlusskasten jeweils eine Strommesseinheit, wie z. B. einen Durchsteckwandler, zur Erfassung der jeweiligen Strangströme auf.

Einer weiteren Ausführungsform zufolge weist die elektronische Steuereinheit zumindest einen elektrischen Eingang zur Erfassung von Eingangssignalen auf. Die an die Zentralsteuereinheit des PV-Wechselrichters übertragbaren Daten enthalten korrespondierende Eingangsdaten. Die Eingangsdaten können binäre Daten oder digital kodierte analoge Daten enthalten, welche z. B. verschiedene interne und/oder externe Schalt-oder Betriebszustände der Steuereinheit des PV-Teilgenerator-Anschlusskastens beschreiben. Die Eingangsdaten können weiterhin Quittierungssignale von Hilfskontakten von Schaltschützen des PV-Teilgenerator-Anschlusskastens umfassen.

Nach einer weiteren Ausführungsform weist die elektronische Steuereinheit zumindest einen elektrischen Ausgang zumindest zum Ansteuern von Schaltmitteln des PV-Teilgenerator-Anschlusskastens und/oder von Stellgliedern für die angeschlossenen PV-Module auf. Die von der Zentralsteuereinheit des PV-Wechselrichters mittels des Powerline-Modems empfangbaren Daten umfassen dazu korrespondierende Steuerdaten.

Dadurch können Schaltmittel, wie z. B. Trennschalter oder Schütze im PV-Teilgenerator-Anschlusskasten, mittels der Steuereinheit des PV-Teilgenerator-Anschlusskastens und/oder mittels der Zentralsteuereinheit des PV-Wechselrichters ein-oder ausgeschaltet werden. Die Stellglieder können beispielsweise so genannte "Tracker" oder "Mover" sein. Diese dienen zur Nachführung der PV-Module entsprechend dem jeweiligen Sonnenstand.

Die Aufgabe der Erfindung wird weiterhin durch einen PV-Generator-Anschlusskasten für eine PV-Anlage gelöst. Bei diesem handelt es sich um einen groß dimensionierten Anschlusskasten oder um einen Schaltschrank. In diesem ist die Mehrzahl von PV-Teilgeneratorleitungen, die von den jeweiligen PV-Teilgenerator-Anschlusskästen stammen, parallel zusammengeschaltet. Ausgangsseitig ist der PV-Generator-Anschlusskasten über eine PV-Gleichstromhauptleitung mit dem zentralen PV-Wechselrichter verbunden. Der PV-Generator-Anschlusskasten kann für jede zugeführte PV-Teilgeneratorleitung einen separaten Sammeltrennschalter aufweisen, um einen fehlerhaften PV-Teilgenerator-Anschlusskasten abschalten zu können. Der PV-Generator-Anschlusskasten kann alternativ oder zusätzlich einen Haupttrennschalter aufweisen, um sämtliche an dem PV-Generator-Anschlusskasten angeschlossene PV-Teilgenerator-Anschlusskästen von dem zentralen PV-Wechselrichter zu trennen.

Erfindungsgemäß ist parallel zum jeweiligen Trennschalter ein Datensignalkoppler geschaltet, sodass Daten, welche mittels zumindest eines Powerline-Modems in den jeweiligen PV-Teilgeneratorleitungen und in der PV-Gleichstromhauptleitung eingekoppelt sind, auch im geöffneten Zustand des jeweiligen Trennschalters weiterleitbar sind.

Im einfachsten Fall ist der Datensignalkoppler ein Kondensator, welcher die hochfrequenten Datensignale in beiden Richtungen passieren lässt. Für die hochvoltige Feldgleichspannung mit der Frequenz O Hz stellt der Kondensator dagegen eine Sperre dar.

Damit ist der Vorteil verbunden, dass eine sichere Freischaltung der PV-Teilgeneratorleitungen und/oder der PV-Gleichstromhauptleitung vom zentralen PV-Wechselrichter und zugleich eine weiterhin sichere Datenübertragung über die geöffneten Trennstellen hinweg gewährleistet sind.

Die Aufgabe der Erfindung wird weiterhin mit einem PV-Wechselrichter für eine PV-Anlage gelöst. Erfindungsgemäß weist der PV-Wechselrichter zumindest ein Powerline-Modem zum Ein-und Auskoppeln der Daten über die PV-Teilgeneratorleitungen und/oder über die PV-Gleichstromhauptleitungen auf.

Dadurch ist eine Kommunikation zur übergeordneten Steuerung und Regelung der PV-Anlage möglich.

Nach einer Ausführungsform sind das zumindest eine Powerline-Modem und die Zentralsteuereinheit jeweils über eine Busverbindung miteinander verbunden. Die Busverbindung kann beispielsweise eine serielle oder parallele Schnittstelle sein.

Nach einer besonderen Ausführungsform weist der PV-Wechselrichter zumindest ein Trennschaltmittel zum Abschalten der PV-Teilgeneratorleitungen und/oder der PV-Gleichstromhauptleitungen auf. Es ist parallel zum jeweiligen Trennschaltmittel ein Datensignalkoppler geschaltet, sodass Daten, welche mittels zumindest eines Powerline-Modems in den jeweiligen PV-Teilgeneratorleitungen und/oder in der PV-Gleichstromhauptleitung eingekoppelt sind, auch in geöffnetem Zustand des jeweiligen Trennschaltmittels weiterleitbar sind. Typischerweise weist ein zentraler PV-Wechselrichter, insbesondere mit einem Leistungsbereich von mehreren Hundert kW, mehrere Trennschalter zum Abschalten jeweils einer oder mehrerer PV-Gleichstromhauptleitungen auf. Dadurch ist bei mangelnder solarer Einspeisung, insbesondere abends und nachts, der Leistungsteil des PV-Wechselrichters von den PV-Modulen trennbar. Typischerweise wird der Leistungsteil des PV-Wechselrichters abgeschaltet, wenn der Eigenverbrauch des PV-Wechselrichters größer ist als die elektrisch eingespeiste Leistung.

Die Datenkoppler ermöglichen in diesem Fall eine sichere Datenkommunikation von der weiter in Betrieb befindlichen Zentralsteuereinheit des PV-Wechselrichters zu den jeweiligen Steuereinheiten der PV-Teilgenerator-Anschlusskästen. Dadurch ist beispielsweise eine Diebstahlüberwachung der PV-Module, welche von den jeweiligen PV-Teilgenerator-Anschlusskästen überwacht werden, möglich.

Die Aufgabe der Erfindung wird weiterhin mit einer PV-Anlage mit zumindest einem erfindungsgemäßen zentralen PV-Wechselrichter und mit einer Vielzahl von erfindungsgemäßen PV-Teilgenerator-Anschlusskästen gelöst.

Der besondere Vorteil ist, dass im Vergleich zu PV-Anlagen nach dem Stand der Technik eine erheblich geringere Anzahl von Leitungen vom zentralen PV-Wechselrichter zu den jeweiligen PV-Teilgenerator-Anschlusskästen verlegt werden muss. Der Querschnitt der zur Verteilung der Leitungen notwendigen Kabelkanäle kann im Vergleich zu herkömmlichen Kabelkanälen weniger als die Hälfte im Querschnitt betragen. Ein weiterer großer Vorteil ist der erheblich reduzierte Montageaufwand zur Verlegung der Leitungen. Darüber hinaus fällt nur ein Bruchteil der Montage- und Materialkosten zur Verlegung der Leitungen an.

Nach einer vorteilhaften Ausführungsform der PV-Anlage weist diese zumindest einen zwischen dem zumindest einen zentralen PV-Wechselrichter unter der Vielzahl von PV-Teilgenerator-Anschlusskästen geschalteten erfindungsgemäßen PV-Generator-Anschlusskasten auf. Dadurch sind auch großflächige PV-Anlagen mit einer Vielzahl von PV-Generator-Anschlusskästen und mit einer Vielzahl daran angeschlossener PV-Teilgenerator-Anschlusskästen realisierbar, wobei die jeweiligen PV-Teilgenerator-Anschlusskästen datentechnisch über die zentrale Steuereinheit des PV-Wechselrichters erreichbar sind.

Die Erfindung sowie vorteilhafte Ausführungen der Erfindung werden im Weiteren anhand der nachfolgenden Figuren näher beschrieben. Es zeigen:
- FIG 1: eine PV-Anlage nach dem Stand der Technik,
- FIG 2: einen PV-Teilgenerator-Anschlusskasten nach dem Stand der Technik,
- FIG 3: ein Beispiel für eine erfindungsgemäße PV-Anlage,
- FIG 4: ein Beispiel für einen erfindungsgemäßen PV-Wechselrichter,
- FIG 5: ein Beispiel für einen erfindungsgemäßen PV-Teilgenerator-Anschlusskasten und
- FIG 6: ein Beispiel für einen erfindungsgemäßen PV-Generator-Anschlusskasten.

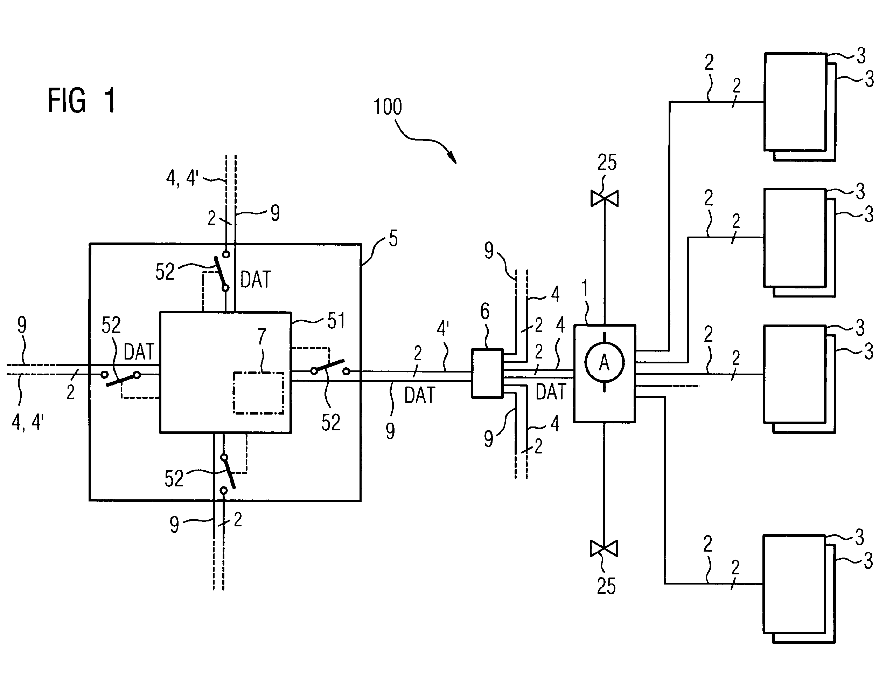

FIG 1 zeigt eine PV-Anlage 100 nach dem Stand der Technik. Im linken Teil der FIG 1 ist ein mit dem Bezugszeichen 5 bezeichneter PV-Wechselrichter dargestellt. Von dem gezeigten PV-Wechselrichter 5 gehen beispielhaft vier PV-Teilgeneratorleitungen 4 bzw. vier PV-Gleichstromhauptleitungen 4' ab. Der jeweils in den PV-Teilgeneratorleitungen 4 bzw. PV-Gleichstromhauptleitungen 4' eingetragene Querstrich mit der Ziffer 2 kennzeichnet, dass es sich um eine vorzugsweise zweiadrige Leitung handelt. Die jeweiligen PV-Teilgeneratorleitungen 4 bzw. PV-Gleichstromhauptleitungen 4' sind über ein ansteuerbares Trennschaltmittel 52 von einem Leistungsteil 51 des PV-Wechselrichters 5 trennbar. Die Ansteuerung erfolgt vorzugsweise durch eine Zentralsteuereinheit 7. Parallel zu den vier PV-Teilgeneratorleitungen 4 bzw. PV-Gleichstromhauptleitungen 4' ist jeweils eine Kommunikationsleitung 9 zur bidirektionalen Übertragung von Daten DAT zwischen dem zentralen PV-Wechselrichter 5 und den jeweiligen, im rechten Teil der FIG 1 gezeigten PV-Teilgenerator-Anschlusskästen 1 dargestellt.

Im mittleren Teil der FIG 1 ist beispielhaft ein PV-Generator-Anschlusskasten 6 dargestellt, welcher in Bezug auf die solare Einspeiseleistung eingangsseitig mit drei PV-Teilgenerator-Anschlusskästen 1 und ausgangsseitig mit dem zentralen PV-Wechselrichter 5 verbunden ist. Im Beispiel der vorliegenden FIG 1 ist aus Gründen der Übersichtlichkeit jedoch nur ein PV-Teilgenerator-Anschlusskasten 1 und nur ein PV-Generator-Anschlusskasten 6 dargestellt. Für kleinere PV-Anlagen 100 ist ein PV-Generator-Anschlusskasten 6 nicht notwendigerweise erforderlich. In diesem Fall ist der jeweilige PV-Teilgenerator-Anschlusskasten 1 über eine PV-Teilgeneratorleitung 4 direkt mit dem PV-Wechselrichter 5 verbunden. Wie die FIG 1 weiter zeigt, werden die Kommunikationsleitungen 9 gleichfalls im Falle des Vorhandenseins eines PV-Generator-Anschlusskastens 6 an den jeweiligen PV-Teilgenerator-Anschlusskasten 1 weiterverteilt.

Mit dem Bezugszeichen 25 ist beispielhaft ein Stellglied bezeichnet, welches durch den PV-Teilgenerator-Anschlusskasten 1 ansteuerbar ist, um z. B. ein PV-Modul 3 entsprechend dem jeweiligen Sonnenstand nachzuführen. Das in dem Kasten des PV-Teilgenerator-Anschlusskastens 1 eingetragene Symbol eines Ampere-Meters symbolisiert das eventuelle Vorhandensein von Strommesseinheiten im PV-Teilgenerator-Anschlusskasten 1. Sie dienen zur Erfassung von einzelnen Strangströmen in PV-Strangleitungen 2, die zu angeschlossenen PV-Modulen 3 führen, und/oder zur Erfassung eines gesamten PV-Teilgeneratorleitungsstromes.

Im rechten Teil der FIG 1 sind beispielhaft fünf in Reihe zu einem PV-Strang geschaltete PV-Module 3 dargestellt. Die Reihenschaltung ist durch die zeichnerisch versetzte Anordnung eines zweiten PV-Moduls 3 grafisch dargestellt.

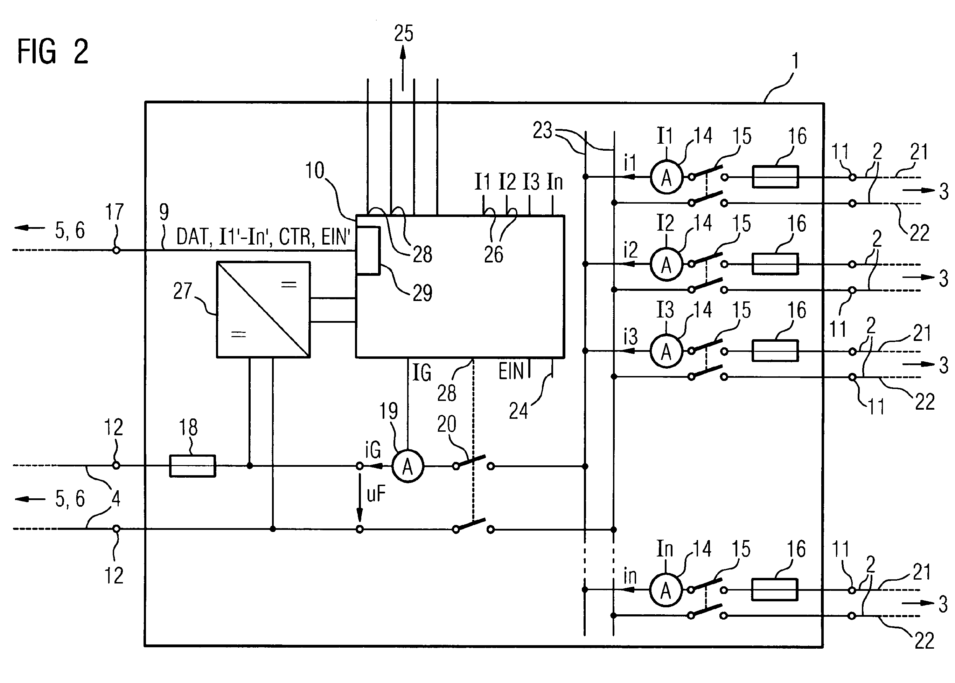

FIG 2 zeigt einen PV-Teilgenerator-Anschlusskasten 1 nach dem Stand der Technik. Der gezeigte PV-Teilgenerator-Anschlusskasten 1 weist beispielhaft vier elektrische Anschlüsse 11 zum Anschließen von einer oder von zwei PV-Strangleitungen 2 auf. Mit dem Bezugszeichen 21 ist ein Plusleiter und mit dem Bezugszeichen 22 ein Minusleiter der PV-Strangleitung 2 bezeichnet. Darüber hinaus weist der gezeigte PV-Teilgenerator-Anschlusskasten 1 einen Teilgeneratorleitungsanschluss 12 auf, über den der PV-Teilgenerator-Anschlusskasten 1 an den zentralen PV-Wechselrichter 5 oder an den PV-Generator-Anschlusskasten 6 angeschlossen werden kann.

Weiterhin weist der PV-Teilgenerator-Anschlusskasten 1 eine elektronische Steuereinheit 10 auf, welche datentechnisch mit der Zentralsteuereinheit 7 des PV-Wechselrichters 5 zum Austausch der Daten DAT verbunden ist. Hierzu weist die Steuereinheit 10 eine Busanschaltung 29 auf, an welcher die Kommunikationsleitung 9 angeschlossen werden kann. Die Steuereinheit 10 selbst ist vorzugsweise ein Mikrocontroller oder ein Mikrocomputer. Die Steuereinheit 10 weist elektrische Ausgänge 28 auf, an welche Stellglieder, wie z. B. Tracker, oder auch Steuermagnete eines zu schaltenden Schaltgerätes angeschlossen werden können. Das Ansteuern der elektrischen Ausgänge 28 erfolgt durch ein entsprechendes Programm der elektronischen Steuereinheit 10. Die Steuereinheit 10 steuert die elektrischen Ausgänge 28 gleichfalls bei Vorliegen eines von der Zentralsteuereinheit 7 des PV-Wechselrichters 5 datentechnisch übertragenen gültigen Steuersignals CTR an.

Die Steuereinheit 10 weist weiterhin beispielhaft vier Strommesseingänge 26 zur Erfassung korrespondierender Strangstrommesswerte I1-In auf. Diese werden in Form von Strommessdaten I1'-In' über die Kommunikationsleitungen 9 an die Zentralsteuereinheit 7 des PV-Wechselrichters 5 übertragen. Die Strangstrommesswerte I1-In stammen von jeweils einer Strommesseinheit 14, welche zur Erfassung eines jeweiligen Strangstromes i1-in in die jeweilige PV-Strangleitung 2 geschaltet ist. Mit dem Bezugszeichen 24 sind elektrische Eingänge der Steuereinheit 10 bezeichnet, um beispielsweise Quittierungssignale von Schaltmitteln, wie z. B. des Teilgenerator-Anschlusskasten-Trennschalters 20, sowie andere zu erfassende Zustände im PV-Teilgenerator-Anschlusskasten 1 als Eingangssignale EIN zu erfassen. Die korrespondierenden Eingangsdaten EIN' können wiederum über die Kommunikationsleitung 9 an die Zentralsteuereinheit 7 des PV-Wechselrichters 5 ausgegeben werden.

In Reihe zur jeweiligen Strommesseinheit 14 sind weiterhin ein optionaler Strangtrennschalter 15 sowie eine Sicherung 16 zur Absicherung der jeweiligen PV-Strangleitung 2 geschaltet. Bei dem gezeigten Strangtrennschalter 15 handelt es sich üblicherweise um einen von Hand betätigbaren Schalter. Die gezeigten vier PV-Strangleitungen 2 sind allesamt parallel an eine gemeinsame Sammelschiene 23 geschaltet, welche ihrerseits an die PV-Teilgeneratorleitung 4 angeschlossen ist. Im PV-Teilgenerator-Anschlusskasten 1 ist in die PV-Teilgeneratorleitung 4 eine optionale Sicherung 18 zur Gruppenabsicherung sowie eine optionale weitere Strommesseinheit 19 zur Erfassung eines Sammelstromes iG geschaltet. Ein entsprechender Sammelstrommesswert IG kann von der elektronischen Steuereinheit 10 erfasst und in entsprechender Weise weiterverarbeitet werden. Unter anderem wird ein zum Sammelstrommesswert IG zugehöriges Strommessdatum IG' über die Kommunikationsleitung 9 weitergeleitet. In Reihe zur weiteren Strommesseinheit 19 ist ein Teilgenerator-Anschlusskasten-Trennschalter 20 dargestellt, welcher zur Gruppenabschaltung der PV-Teilgeneratorleitungen 2 über die Steuereinheit 10 angesteuert werden kann.

Zwischen der gezeigten Steuereinheit 10 und der PV-Teilgeneratorleitung 4 ist weiterhin eine Spannungsversorgung in Form eines DC/DC-Wandlers 27 geschaltet, welcher die üblicherweise an der PV-Teilgeneratorleitung 4 anliegende hochvoltige Feldspannung UF in eine Niedervoltspannung zur Versorgung der Steuereinheit 10 des PV-Teilgenerator-Anschlusskastens 1 umwandelt.

Alternativ oder zusätzlich kann die Niedervoltspannung über zusätzliche Leitungen getrennt zugeführt werden.

FIG 3 zeigt ein Beispiel für eine erfindungsgemäße PV-Anlage 100. Erfindungsgemäß erfolgt die Datenkommunikation zwischen der Zentralsteuereinheit 7 des PV-Wechselrichters 5 und den jeweiligen erfindungsgemäßen PV-Teilgenerator-Anschlusskästen 1 im Unterschied zur FIG 1 nun über jeweils ein und dieselbe PV-Teilgeneratorleitung 4 bzw. PV-Gleichstromhauptleitung 4'. Zur Gewährleistung einer bidirektionalen Datenübertragung ist zwischen möglichen Trennstellen jeweils ein Datensignalkoppler 56, 66 geschaltet. Der jeweilige Aufbau des erfindungsgemäßen PV-Wechselrichters 5, des erfindungsgemäßen PV-Generator-Anschlusskastens 6 sowie des erfindungsgemäßen PV-Teilgenerator-Anschlusskastens 1 ist dazu in den nachfolgenden FIGen 4 bis 6 im Detail dargestellt.

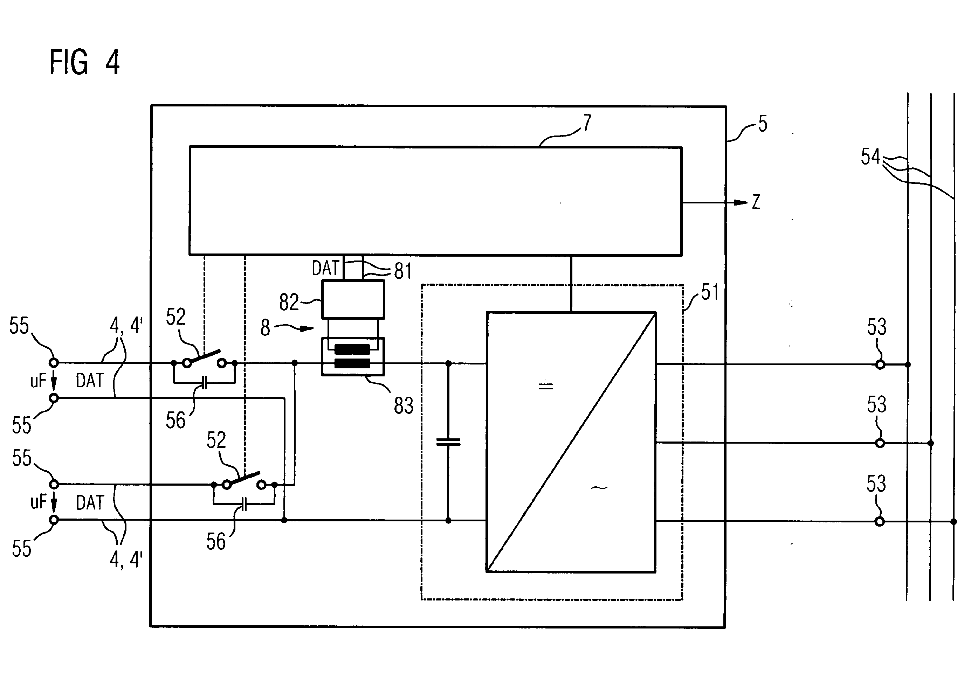

FIG 4 zeigt ein Beispiel für einen erfindungsgemäßen PV-Wechselrichter 5. Der gezeigte PV-Wechselrichter 5 weist beispielhaft zwei Teilgeneratorleitungsanschlüsse 55 zum Anschließen je einer PV-Teilgeneratorleitung 4 einer Vielzahl von nicht weiter dargestellten PV-Teilgenerator-Anschlusskästen 1 auf. Alternativ oder zusätzlich kann an den Teilgeneratorleitungsanschlüssen 55 auch eine PV-Gleichstromhauptleitung 4' eines dazwischengeschalteten PV-Generator-Anschlusskastens 6 vorhanden sein. Weiterhin weist der PV-Wechselrichter 5 einen Netzanschluss 53 zum Anschließen des PV-Wechselrichters 5 an ein nicht weiter bezeichnetes Stromversorgungsnetz auf. Mit dem Bezugszeichen 54 sind Stromversorgungsleitungen bezeichnet. Weiterhin weist der PV-Wechselrichter 5 die Zentralsteuereinheit 7 zur Steuerung des PV-Wechselrichters 5 sowie auch zur Übertragung von Daten DAT an die Vielzahl von datentechnisch mit der Zentralsteuereinheit 7 verbundenen PV-Teilgenerator-Anschlusskästen 1 auf.

Erfindungsgemäß weist der gezeigte PV-Wechselrichter 5 zumindest ein Powerline-Modem 8 zum Ein- und Auskoppeln der Daten DAT über die PV-Teilgeneratorleitungen 4 und/oder über die PV-Gleichstromhauptleitungen 4' auf. Im Beispiel der FIG 4 ist nur ein Powerline-Modem 8 vorhanden, welches über eine Busverbindung 81 mit der Zentralsteuereinheit 7 verbunden ist. Mit dem Bezugszeichen 82 ist eine Modemeinheit zur signaltechnischen Aufbereitung der Daten DAT bezeichnet. Mit dem Bezugszeichen 83 ist beispielhaft ein Übertrager bezeichnet, mittels welchem die Daten DAT auf induktivem Wege in die PV-Teilgeneratorleitung 4 bzw. in die PV-Gleichstromhauptleitung 4' ein- und ausgekoppelt werden können. Alternativ können die Daten DAT auch auf kapazitivem Wege oder auf resistivem Wege dort ein- und ausgekoppelt werden. Weiterhin weist der PV-Wechselrichter 5 beispielhaft zwei Trennschaltmittel 52 zum Abschalten der PV-Teilgeneratorleitungen 4 und/oder der PV-Gleichstromhauptleitungen 4' auf. Es ist parallel zu den beiden gezeigten Trennschaltmitteln 52 weiterhin erfindungsgemäß ein Datensignalkoppler 56 in Form eines Kondensators geschaltet. Dadurch sind die Daten DAT, welche mittels des Powerline-Modems 8 in den jeweiligen PV-Teilgeneratorleitungen 4 und/oder in der PV-Gleichstromhauptleitung 4' eingekoppelt sind, auch im geöffneten Zustand des jeweiligen Trennschaltmittels 52 weiterleitbar. Dies ist im vorliegenden Beispiel gemäß der FIG 4 der Fall.

Weiterhin ist mit dem Bezugszeichen 51 ein Leistungsteil des PV-Wechselrichters 5 bezeichnet, welcher die hochvoltige anliegende Feldspannung UF in eine dreiphasige Netzspannung umwandelt. Alternativ kann der PV-Wechselrichter 5 die eingangsseitig anliegende Feldspannung UF auch in eine einphasige Wechselspannung umsetzen.

Im Beispiel der FIG 7 ist die Zentralsteuereinheit 7 Teil des PV-Wechselrichters 5. Mit dem Bezugszeichen Z ist eine übergeordnete Leitstelle oder eine Überwachungszentrale bezeichnet. Zwischen ihr und der Zentralsteuereinheit 7 können übergeordnete Daten in beiden Richtungen übermittelt werden. Alternativ kann die Zentralsteuereinheit 7 des PV-Wechselrichters 5 bzw. deren Funktionalität auch außerhalb des PV-Wechselrichters 5 angeordnet sein, wie z. B. in einem Prozessrechner eines Leitstandes oder in einem Bedien- und Beobachtungsgerät. In diesem Fall kann die Zentralsteuereinheit über eine Datenverbindung, wie z. B. über eine Internet- oder Intranetverbindung, mit dem PV-Wechselrichter 5 verbunden sein. Die Datenübertragung kann leitungsgebunden oder drahtlos erfolgen, wie z. B. über eine Ethernetleitung oder mittels WLAN.

FIG 5 zeigt ein Beispiel für einen erfindungsgemäßen PV-Teilgenerator-Anschlusskasten 1. Erfindungsgemäß weist dieser im Vergleich zum Beispiel der FIG 2 nun an Stelle der Kommunikationsleitung 9 ein Powerline-Modem 8 zum Ein- und Auskoppeln der Daten DAT über die PV-Teilgeneratorleitung 4 auf. Das Powerline-Modem 8 und die Steuereinheit 10 sind dabei über eine Busverbindung 81 miteinander verbunden. Im Beispiel der FIG 5 erfolgt die Ein- und Auskopplung der Daten DAT in die PV-Teilgeneratorleitung 4 bzw. in die PV-Gleichstromhauptleitung 4' gleichfalls auf induktiv gekoppeltem Wege. In entsprechender Weise können die mit den Strangströmen i1-in und/oder mit dem Sammelstrangstrom iG korrespondierenden Strommessdaten I1'-In', IG' als Daten DAT mittels des Powerline-Modems 8 an die Zentralsteuereinheit 7 des PV-Wechselrichters 5 übertragen werden. In entsprechender Weise sind mit den Eingangssignalen EIN korrespondierende Eingangsdaten EIN' mittels des Powerline-Modems 8 an die Zentralsteuereinheit 7 übertragbar. Auf umgekehrtem Wege können von der Zentralsteuereinheit 7 des PV-Wechselrichters 5 mittels des Powerline-Modems 8 empfangbare bzw. empfangene Daten DAT Steuerdaten CTR umfassen, die mit Ansteuersignalen zum Ansteuern von Schaltmitteln 16, 20 des PV-Teilgenerator-Anschlusskastens 1 und/oder von Stellgliedern 25 für die PV-Module 3 korrespondieren. Die Steuereinheit 10 kann darüber hinaus weitere digitale und/oder analoge Ausgänge aufweisen, über welche nicht weiter bezeichnete Schaltelemente, Aktoren etc. angesteuert werden können.

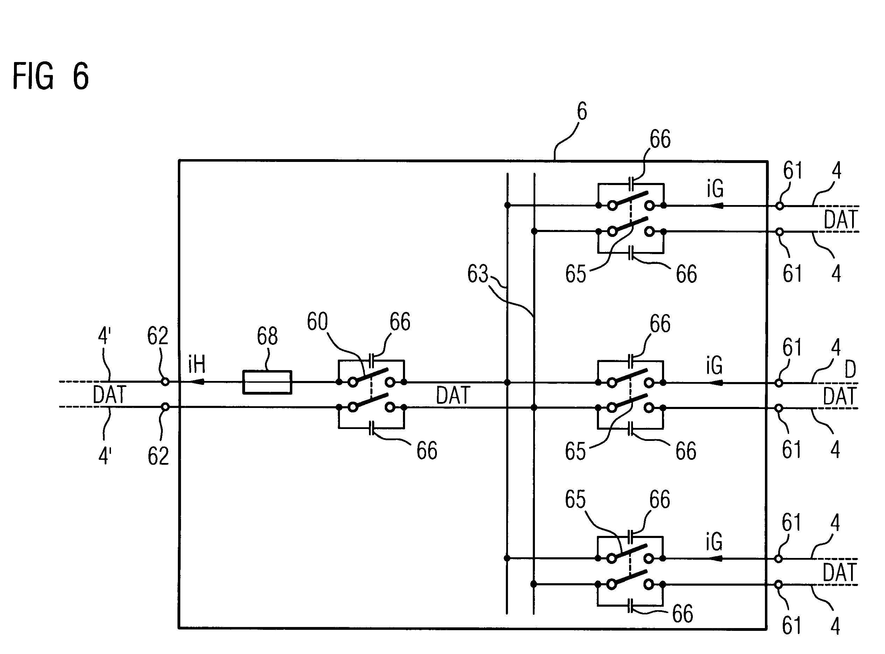

FIG 6 zeigt ein Beispiel für einen erfindungsgemäßen PV-Generator-Anschlusskasten 6. Der PV-Generator-Anschlusskasten 6 weist im Beispiel der FIG 6 drei Teilgeneratorleitungsanschlüsse 61 zum Anschließen jeweils einer PV-Teilgeneratorleitung 4 eines PV-Teilgenerator-Anschlusskastens 1 auf. Er weist weiterhin einen Gleichstromhauptleitungsanschluss 62 zum Anschließen einer PV-Gleichstromhauptleitung 4', insbesondere eines entfernt gelegenen zentralen PV-Wechselrichters 5, auf. Der PV-Generator-Anschlusskasten 6 weist beispielhaft einen Haupttrennschalter 60 zum Trennen der PV-Gleichstromhauptleitung 4' und/oder jeweils einen Sammeltrennschalter 65 zum Trennen der gezeigten PV-Teilgeneratorleitungen 4 auf.

Erfindungsgemäß ist parallel zum jeweiligen Trennschalter 60, 65 ein Datensignalkoppler 66 geschaltet, sodass Daten DAT, welche in den jeweiligen PV-Teilgeneratorleitungen 4 und in der PV-Gleichstromhauptleitung 4' eingekoppelt sind, auch im geöffneten Zustand des jeweiligen Trennschalters 60, 65 weiterleitbar sind. Im Beispiel der FIG 6 ist der Datensignalkoppler 66 ein Kondensator. Weiterhin ist mit dem Bezugszeichen iH ein Hauptsammelstrom und mit dem Bezugszeichen 68 eine Sicherung zur Absicherung der PV-Gleichstromhauptleitung 4' bezeichnet. Mit dem Bezugszeichen 63 ist eine Sammelschiene bezeichnet, an welcher die PV-Teilgeneratorleitungen 4 parallel angeschaltet sind und welche an die PV-Gleichstromhauptleitung 4' geschaltet ist. Wie die FIG 6 zeigt, ist in beiden Richtungen, das heißt von links nach rechts sowie von rechts nach links, eine Weiterleitung von Datensignalen als Träger der Daten DAT über die jeweiligen Trennstellen der Trennschalter 60, 65 hinweg möglich.

## Patentansprüche

1. PV-Teilgenerator-Anschlusskasten für eine PV-Anlage (100), welcher eine Vielzahl von elektrischen Anschlüssen (11) zum möglichen Anschließen jeweils einer PV-Strangleitung (2) eines oder mehrerer in Reihe geschalteter PV-Module (3) aufweist und welcher einen Teilgeneratorleitungsanschluss (12) zum Anschließen einer PV-Teilgeneratorleitung (4) eines entfernt gelegenen zentralen PV-Wechselrichters (5) oder zum Anschließen einer PV-Teilgeneratorleitung (4) eines dazwischengeschalteten PV-Generator-Anschlusskastens (6) aufweist, wobei der PV-Teilgenerator-Anschlusskasten eine elektronische Steuereinheit (10) aufweist, welche datentechnisch mit einer Zentralsteuereinheit (7) des PV-Wechselrichters (5) zum Austausch von Daten (DAT) verbunden ist, **dadurch gekennzeichnet, dass** der PV-Teilgenerator-Anschlusskasten ein Powerline-Modem (8) zum Ein- und Auskoppeln der Daten (DAT) über die PV-Teilgeneratorleitung (4) aufweist.

2. PV-Teilgenerator-Anschlusskasten nach Anspruch 1, **dadurch gekennzeichnet, dass** das Powerline-Modem (8) und die Steuereinheit (10) über eine Busverbindung (81) miteinander verbunden sind.

3. PV-Teilgenerator-Anschlusskasten nach Anspruch 1 oder 2, **dadurch gekennzeichnet, dass** der PV-Teilgenerator-Anschlusskasten zumindest eine Strommesseinheit (14) zur Messung eines jeweiligen Strangstromes (i1-in) und/oder eines Sammelstrangstromes (iG) aufweist und dass die an die Zentralsteuereinheit (7) des PV-Wechselrichters (5) mittels des Powerline-Modems (8) übertragbaren Daten (DAT) korrespondierende Strommessdaten (I1'-In', IG') enthalten.

4. PV-Teilgenerator-Anschlusskasten nach einem der Ansprüche 1 bis 3, **dadurch gekennzeichnet, dass** die elektronische Steuereinheit (10) zumindest einen elektrischen Eingang (24) zur Erfassung von Eingangssignalen (EIN) aufweist und dass die an die Zentralsteuereinheit (7) des PV-Wechselrichters (5) mittels des Powerline-Modems (8) übertragbaren Daten (DAT) korrespondierende Eingangsdaten (EIN') enthalten.

5. PV-Teilgenerator-Anschlusskasten nach einem der vorangegangenen Ansprüche, **dadurch gekennzeichnet, dass** die elektronische Steuereinheit (10) zumindest einen elektrischen Ausgang (28) zumindest zum Ansteuern von Schaltmitteln (16, 20) des PV-Teilgenerator-Anschlusskastens und/oder von Stellgliedern (25) für die PV-Module (3) aufweist und dass die von der Zentralsteuereinheit (7) des PV-Wechselrichters (5) mittels des Powerline-Modems (8) empfangbaren Daten (DAT) korrespondierende Steuerdaten (CTR) umfassen.

6. PV-Generator-Anschlusskasten für eine PV-Anlage (100), welcher eine Mehrzahl von Teilgeneratorleitungsanschlüssen (61) zum möglichen Anschließen jeweils einer PV-Teilgeneratorleitung (4) eines PV-Teilgenerator-Anschlusskastens (1) aufweist und welcher einen Gleichstromhauptleitungsanschluss (62) zum Anschließen einer PV-Gleichstromhauptleitung (4') eines entfernt gelegenen zentralen PV-Wechselrichters (5) aufweist, wobei der PV-Generator-Anschlusskasten zumindest einen Haupttrennschalter (60) zum Trennen der PV-Gleichstromhauptleitung (4') und/oder zumindest einen Sammeltrennschalter (65) zum Trennen der jeweiligen PV-Teilgeneratorleitung (4) aufweist, **dadurch gekennzeichnet, dass** parallel zum jeweiligen Trennschalter (60, 65) ein Datensignalkoppler (66) geschaltet ist, sodass Daten (DAT), welche mittels zumindest eines Powerline-Modems (8) in den jeweiligen PV-Teilgeneratorleitungen (4) und in der PV-Gleichstromhauptleitung (4') eingekoppelt sind, auch im geöffneten Zustand des jeweiligen Trennschalters (60, 65) weiterleitbar sind.

7. PV-Wechselrichter für eine PV-Anlage (100), welcher zumindest einen Teilgeneratorleitungsanschluss (55) zum möglichen Anschließen je einer PV-Teilgeneratorleitung (4) einer Vielzahl von PV-Teilgenerator-Anschlusskästen (1) und/oder zum Anschließen je einer PV-Gleichstromhauptleitung (4') eines dazwischengeschalteten PV-Generator-Anschlusskastens (6) aufweist und welcher einen Netzanschluss (53) zum Anschließen des PV-Wechselrichters an ein Stromversorgungsnetz aufweist, wobei der PV-Wechselrichter eine Zentralsteuereinheit (7) zur Steuerung des PV-Wechselrichters sowie zur Übertragung von Daten (DAT) an die Vielzahl von datentechnisch mit der Zentralsteuereinheit (7) verbundenen PV-Teilgenerator-Anschlusskästen (1) aufweist, **dadurch gekennzeichnet, dass** der PV-Wechselrichter zumindest ein Powerline-Modem (8) zum Ein- und Auskoppeln der Daten (DAT) über die PV-Teilgeneratorleitungen (4) und/oder über die PV-Gleichstromhauptleitungen (4') aufweist.

8. PV-Wechselrichter nach Anspruch 7, **dadurch gekennzeichnet, dass** das zumindest eine Powerline-Modem (8) und die Zentralsteuereinheit (7) jeweils über eine Busverbindung (81) miteinander verbunden sind.

9. PV-Wechselrichter nach Anspruch 7 oder 8, **dadurch gekennzeichnet, dass** der PV-Wechselrichter zumindest ein Trennschaltmittel (52) zum Abschalten der PV-Teilgeneratorleitungen (4) und/oder der PV-Gleichstromhauptleitungen (4') aufweist und dass parallel zum jeweiligen Trennschaltmittel (52) ein Datensignalkoppler (56) geschaltet ist, sodass Daten (DAT), welche mittels zumindest eines Powerline-Modems (8) in den jeweiligen PV-Teilgeneratorleitungen (4) und/oder in der PV-Gleichstromhauptleitung (4') eingekoppelt sind, auch im geöffneten Zustand des jeweiligen Trennschaltmittels (52) weiterleitbar sind.

10. PV-Anlage mit zumindest einem zentralen PV-Wechselrichter (5) nach einem der Ansprüche 7 bis 9 und mit einer Vielzahl von PV-Teilgenerator-Anschlusskästen (1) nach einem der Ansprüche 1 bis 5.

11. PV-Anlage nach Anspruch 9, **dadurch gekennzeichnet, dass** die PV-Anlage zumindest einen zwischen dem zumindest einen zentralen PV-Wechselrichter (5) und der Vielzahl von PV-Teilgenerator-Anschlusskästen (1) geschalteten PV-Generator-Anschlusskasten (6) nach Anspruch 6 aufweist.

## Claims

1. PV sub-generator junction box for a PV system (100), which features a plurality of electrical terminals (11) for the possible connection in each instance of a PV string line (2) of one or more serially connected PV modules (3) and which features a sub-generator line terminal (12) for connecting a PV sub-generator line (4) of a remote central PV inverter (5) or for connecting a PV sub-generator line (4) of an intermediate PV generator junction box (6), the PV sub-generator junction box featuring an electronic control unit (10), which is connected for data communication to a central control unit (7) of the PV inverter (5) for the exchange of data (DAT), **characterised in that** the PV sub-generator junction box features a power line modem (8) to feed in and retrieve the data (DAT) by way of the PV sub-generator line (4).

2. PV sub-generator junction box according to claim 1, **characterised in that** the power line modem (8) and the control unit (10) are connected to one another by way of a bus connection (81).

3. PV sub-generator junction box according to claim 1 or 2, **characterised in that** the PV sub-generator junction box features at least one current measurement unit (14) for measuring a respective string current (il-in) and/or a collective string current (iG) and the data (DAT) that can be transmitted to the central control unit (7) of the PV inverter (5) by means of the power line modem (8) contains corresponding current measurement data (Il' - In', IG').

4. PV sub-generator junction box according to one of claims 1 to 3, **characterised in that** the electronic control unit (10) features at least one electrical input (24) for detecting input signals (EIN) and the data (DAT) that can be transmitted to the central control unit (7) of the PV inverter (5) by means of the power line modem (8) contains corresponding input data (EIN').

5. PV sub-generator junction box according to one of the preceding claims, **characterised in that** the electronic control unit (10) features at least one electrical output (28) at least for activating switching means (16, 20) of the PV sub-generator junction box and/or actuators (25) for the PV modules (3) and the data (DAT) that can be received from the central control unit (7) of the PV inverter (5) by means of the power line modem (8) comprises corresponding control data (CTR).

6. PV generator junction box for a PV system (100), which features a plurality of sub-generator line terminals (61) for the possible connection in each instance of a PV sub-generator line (4) of a PV sub-generator junction box (1) and which features a main DC power line terminal (62) for connecting a PV main DC power line (4') of a remote central PV inverter (5), the PV generator junction box featuring at least one main circuit breaker (60) for disconnecting the PV main DC power line (4') and/or at least one collective circuit breaker (65) for disconnecting the respective PV sub-generator line (4), **characterised in that** a data signal coupler (66) is connected parallel to the respective circuit breaker (60, 65), so that data (DAT) that is fed in by means of at least one power line modem (8) in the respective PV sub-generator lines (4) and in the PV main DC power line (4') can be forwarded, even if the respective circuit breaker (60, 65) is in the open state.

7. PV inverter for a PV system (100), which features at least one sub-generator line terminal (55) for the possible connection of one PV sub-generator line (4) in each instance of a plurality of PV sub-generator junction boxes (1) and/or for connecting a PV main DC power line (4') in each instance of an intermediate PV generator junction box (6), and which features a network connection (53) for connecting the PV inverter to a power supply network, the PV inverter featuring a central control unit (7) for controlling the PV inverter and for transmitting data (DAT) to the plurality of PV sub-generator junction boxes (1) connected for data communication to the central control unit (7), **characterised in that** the PV inverter features at least one power line modem (8) for feeding in and retrieving the data (DAT) by way of the PV sub-generator lines (4) and/or by way of the PV main DC power lines (4').

8. PV inverter according to claim 7, **characterised in that** the at least one power line modem (8) and the central control unit (7) are connected respectively to one another by way of a bus connection (81).

9. PV inverter according to claim 7 or 8, **characterised in that** the PV inverter features at least one circuit breaking means (52) for disconnecting the PV sub-generator lines (4) and/or the PV main DC power lines (4') and that a data signal coupler (56) is connected parallel to the respective circuit breaking means (52), so that data (DAT) that is fed in by means of at least one power line modem (8) in the respective PV sub-generator lines (4) and/or in the PV main DC power line (4') can be forwarded even if the respective circuit breaking means (52) is in the open state.

10. PV system having at least one central PV inverter (5) according to one of claims 7 to 9 and having a plurality of PV sub-generator junction boxes (1) according to one of claims 1 to 5.

11. PV system according to claim 9, **characterised in that** the PV system features at least one PV generator junction box (6) according to claim 6, connected between the at least one central PV inverter (5) and the plurality of PV sub-generator junction boxes (1).

## Revendications

1. Boîte de raccordement d'un sous-générateur PV pour une installation ( 100 ) PV, qui comporte une pluralité de bornes ( 11 ) électriques pour le raccordement éventuel respectivement d'une ligne ( 2 ) de phase PV d'un ou de plusieurs modules ( 3 ) PV montés en série et qui a une borne ( 12 ) de ligne de sous-générateur pour le raccordement d'une ligne ( 4 ) de sous-générateur PV d'un onduleur ( 5 ) PV central éloigné ou pour le raccordement d'une ligne ( 4 ) de sous-générateur PV d'une boîte ( 6 ) de raccordement de générateur PV montés entre eux, la boîte de raccordement de sous-générateur PV ayant une unité ( 10 ) électronique de commande, qui, pour l'échange de données ( DAT ), est reliée en technique de données à une unité ( 7 ) centrale de commande de l'onduleur ( 5 ) PV, **caractérisée en ce que** la boîte de raccordement du sous-générateur PV comporte un modem ( 8 ) powerline pour l'entrée et la sortie des données (DAT) par la ligne ( 4 ) de sous-générateur PV.

2. Boîte de raccordement d'un sous-générateur PV suivant la revendication 1, **caractérisée en ce que** le modem ( 8 ) powerline et l'unité ( 10 ) de commande sont reliés entre eux par une liaison ( 81 ) par bus.

3. Boîte de raccordement d'un sous-générateur PV suivant la revendication 1 ou 2, **caractérisée en ce que** la boîte de raccordement du sous-générateur PV comporte au moins une unité ( 14 ) de mesure du courant pour la mesure d'un courant ( i1 à in) de phase respectif et/ou d'un courant ( iG ) de phase groupé et **en ce que** les données ( DAT ) pouvant être transmises à l'unité ( 7 ) centrale de commande de l'onduleur ( 5) PV au moyen du modem ( 8 ) powerline contiennent des données ( I1' à In', IG' ) de mesure de courant correspondantes.

4. Boîte de raccordement d'un sous-générateur PV suivant l'une des revendications 1 à 3, **caractérisée en ce que** l'unité ( 10 ) électronique de commande a au moins une entrée ( 24 ) électrique pour la détection de signaux ( EIN ) d'entrée et **en ce que** les données ( DAT ) pouvant être transmises à l'unité ( 7 ) centrale de commande de l'onduleur ( 5 ) PV au moyen du modem ( 8 ) powerline contiennent des données ( EIN' ) d'entrée correspondantes.

5. Boîte de raccordement d'un sous-générateur PV suivant l'une des revendications précédentes, **caractérisée en ce que** l'unité ( 10 ) électronique de commande a au moins une sortie ( 28 ) électrique, au moins pour commander des moyens ( 16, 20 ) de commutation de la boîte de raccordement du sous-générateur PV et/ou des éléments ( 25 ) de commande du module ( 3 ) PV et **en ce que** les données ( DAT ) pouvant être reçues par l'unité ( 7 ) centrale de commande de l'onduleur ( 5 ) PV au moyen du modem ( 8 ) powerline comprennent des données ( CTR ) de données correspondantes.

6. Boîte de raccordement d'un générateur PV pour une installation ( 100 ) PV, qui comporte une multiplicité de bornes ( 61 ) de lignes de sous-générateur pour le raccordement éventuel respectivement d'une ligne ( 4 ) de sous-générateur PV d'une boîte ( 1 ) de raccordement de sous-générateur PV et qui a une borne ( 62 ) de ligne principale de courant continu pour le raccordement de ligne ( 4' ) principale de courant continu PV d'un onduleur ( 5 ) PV central éloigné, la boîte de raccordement du générateur PV ayant au moins un sectionneur ( 60 ) principal pour le sectionnement de la ligne ( 4' ) principale de courant continu PV et/ou au moins un sectionneur ( 65 ) groupé pour le sectionnement de la ligne ( 4 ) de sous-générateur PV respective, **caractérisée en ce qu'**en parallèle au sectionneur ( 60, 65 ) respectif est monté un coupleur ( 66 ) de signal de données, de manière à pouvoir acheminer, même dans l'état ouvert du sectionneur ( 60, 65 ) respectif, des données ( DAT ) qui sont injectées dans les lignes ( 4 ) de sous-générateur PV respectives et dans la ligne ( 4' ) principale de courant continu PV au moyen d'au moins un modem ( 8 ) powerline.

7. Onduleur PV pour une installation ( 100 ) PV, qui comprend au moins une borne ( 55 ) de ligne de sous-générateur pour le raccordement éventuel respectivement d'une ligne ( 4 ) de sous-générateur PV d'une pluralité de boîtes ( 1 ) de raccordement de sous-générateur PV et/ou pour le raccordement respectivement d'une ligne ( 4' ) principale de courant continu PV d'une boîte ( 6 ) de raccordement de générateur PV montée intermédiairement et qui comporte une borne ( 53 ) de réseau pour le raccordement de l'onduleur PV à un réseau d'alimentation en courant, l'onduleur PV ayant une unité ( 7 ) centrale de commande pour la commande de l'onduleur PV ainsi que des boîtes ( 1 ) de raccordement d'un sous-générateur PV reliées en technique de données à l'unité ( 7 ) centrale de commande, pour la transmission de données ( DAT ), **caractérisé en ce que** l'onduleur PV comprend au moins un modem ( 8 ) powerline pour l'entrée et la sortie des données ( DAT ) par les lignes ( 4 ) du sous-générateur PV et/ou par les lignes ( 4' ) principales de courant continu PV.

8. Onduleur PV suivant la revendication 7, **caractérisé en ce que** le au moins un modem ( 8 ) powerline et l'unité ( 7 ) centrale de commande sont reliés respectivement l'une à l'autre par une liaison ( 81 ) par bus.

9. Onduleur PV suivant la revendication 7 ou 8, **caractérisé en ce que** l'onduleur PV comporte au moins un moyen ( 52 ) de sectionnement pour interrompre les lignes ( 4 ) de sous-générateur PV et/ou les lignes ( 4' ) principales de courant continu PV et **en ce qu'**un coupleur ( 56 ) de signal de données est monté en parallèle au moyen ( 52 ) de sectionnement respectif, de sorte que des données ( DAT ), qui sont injectées au moyen d'au moins un modem ( 8 ) powerline dans les lignes ( 4 ) de sous-générateur PV respectives et/ou dans la ligne ( 4' ) principale de courant continu PV, peuvent être acheminées même dans l'état ouvert du moyen ( 52 ) de sectionnement respectif.

10. Installation PV ayant au moins un onduleur (5 ) PV central suivant l'une des revendications 7 à 9 et ayant une pluralité de boîtes ( 1 ) de raccordement d'un sous-générateur PV suivant l'une des revendications 1 à 5.

11. Installation PV suivant la revendication 9, **caractérisée en ce que** l'installation PV comprend au moins une boîte ( 6 ) de raccordement d'un générateur PV suivant la revendication 6, montée entre le au moins un onduleur ( 5 ) PV central et la pluralité de boîtes ( 1 ) de raccordement d'un sous-générateur PV.
